# EUROPÄISCHE PATENTSCHRIFT

(11) **EP 0 487 891 B1**
(45) Veröffentlichungstag und Bekanntmachung des Hinweises auf die Patenterteilung: **02.02.1994**
(21) Anmeldenummer: 91117786.3
(22) Anmeldetag: 18.10.1991
(51) Int. Cl.: B60G 7/02

(54) **Elastisches Gleitlager**
Elastic translation mounting
Palier coulissant élastique

(30) Priorität: 29.11.1990 DE 4037966
(43) Veröffentlichungstag der Anmeldung: 03.06.1992
(73) Patentinhaber: LEMFOERDER METALLWAREN AG., D-49441 Lemförde (DE)
(72) Erfinder: Joerdens, Ernst-Günter, W-2845 Damme (DE); Siemer, Hubert, W-2848 Vechta (DE)
(74) Vertreter: Bruse, Willy Hans Heinrich

(56) Entgegenhaltungen:
- EP-A- 0 317 727
- DE-A- 1 405 936
- DE-A- 1 630 095
- DE-A- 3 113 049
- DE-B- 2 342 990
- GB-A- 2 202 923
- PATENT ABSTRACTS OF JAPAN vol. 014, no. 196 (M-096)20. April 1990

## Beschreibung

Die Erfindung betrifft ein elastisches Gleitlager für Fahrwerksteile in Kraftfahrzeugen nach dem Oberbegriff des Patentanspruches 1.

Solche Ausbildungsmerkmale sind aus der JP-A-02038118 (Abstract) bekannt. Bei dieser Anordnung werden die Aufnahmebuchse und die mit ihr verbundenen Lagerelemente axial einseitig durch eine Feder belastet, so daß Federkräfte die auf der gegenüberliegenden Seite vorgesehenen Axiallagerflächen gegeneinander belasten und eine axiale Dämpfung mit einer beeinflußbaren Kennlinie nur in einer Richtung erreicht wird. Axialkräfte in der Gegenrichtung führen zur Ablösung der Axiallagerflächen. Außerdem besteht bei der bekannten Anordnung ein unerwünschter Körperschall-Kurzschluß zwischen der Innenbuchse und der Aufnahmebuchse über die Feder und deren Abstützung an metallischen Teilen der Aufnahmebuchse.

Aus der EP-A-0 317 727 ist ein Lager für einen Radlenker bekannt, bei dem der sich am axialen Ende der Innenbuchse erstreckende Flanschvorsprung mit der Innenbuchse einstückig geformt ist. Der radiale Flanschvorsprung am axialen Ende der Außenbuchse wird hierbei durch einen mit der Aufnahmebuchse axial fest verbundenen Ring gebildet. Bei diesem Lager sind die Außenbuchse und die Innenbuchse zwar gleitend drehbeweglich, aber axial nicht gegeneinander verschieblich angeordnet.

Aus der DE-A-38 00 314 und der DE-C-38 04 886 ergeben sich ähnlich ausgebildete Lager, die paarweise in einer zueinander spiegelbildlichen Anordnung eingebaut und mit einem Axialspiel, welches eigentlich unerwünscht ist, gegeneinander verspannt sind, um das Drehmoment niedrig zu halten. Zur Verminderung des an sich hohen Verschleißes solcher Gleitlager umgreift bei dieser bekannten Ausführung eine einstückig mit dem Gummikörper ausgebildete Dichtlippe das Profil des Flanschvorsprunges der beiden Innenbuchsen und der Außenbuchse außenseitig und berührt auf der axial äußeren Seite den Flanschvorsprung an der Innenbuchse unter Vorspannung. Außerdem ist zwischen dem sich radial ausdehnenden Flanschvorsprung an den beiden Innenbuchsen und an der Außenbuchse eine Beschichtung aus einem Kunststoff mit guten Gleiteigenschaften vorgesehen.

Aus der DE-C-36 13 123 ist ein Gleitlager bekannt, bei dem sich zwischen Axialflächen einer Innenbuchse und einer Außenbuchse eine auf der Innenbuchse fest angeordnete Kunststoffschicht (PTFE-Schicht = Polytetrafluoräthylen) befindet, die gute Gleiteigenschaften aufweist.

Ein Gummi-Metallager vergleichbarer Bauart zur Aufnahme axialer und radialer Belastungen ist auch aus der DE-B-23 42 990 bekannt, jedoch ist dies ein Molekularlager, welches axiale Bewegungen des inneren Lagerteils gegenüber dem äußeren Lagerteil nur im Bereich einer zulässigen Materialverformung kompensiert.

Aufgabe der Erfindung ist es, ein axial vorgespanntes, weitestgehend von Scherspannungen im Elastomerkörper freies Gleitlager der eingangs genannten Bauart mit einem geringen Reibmoment und guten Laufeigenschaften mit einer von der radialen Federcharakteristik unabhängigen, in beiden Richtungen wirksamen axialen Federcharakteristik mit einem möglichst geringen baulichen Aufwand zu schaffen. Erfindungsgemäß wird diese Aufgabe durch eine Ausbildung nach dem Kennzeichen des Patentanspruches 1 gelöst.

Bei einem Gleitlager mit diesen Ausbildungsmerkmalen werden die radialen Belastungen und die axialen Belastungen in an sich bekannter Weise durch getrennte Bauteile ausgefedert, so daß der die Außenbuchse umgebende Elastomerkörper nur noch radiale Belastungen aufnimmt und in seiner Federcharakteristik optimal auf diese radialen Belastungen eingestellt werden kann.

Axiale Belastungen in beiden Richtungen werden jeweils von einem der beiden Zwischenglieder kompensiert, wobei der dabei auftretende Aufbau von Rückstellkräften in den Zwischengliedern durch die geometrische Form, durch Materialbeschaffenheit und andere Parameter bestimmt werden kann. In herkömmlicher Weise können bei einer solchen Lagerausbildung die beiden spiegelbildlich zueinander angeordneten Innenbuchsen durch einen diese durchgreifenden Bolzen im Fahrzeugteil verankert und in axialer Richtung so gegeneinander verspannt werden, daß ein spielfreier Einbau bei einem geringsten Reibmoment möglich ist.

Die axiale Federcharakteristik des Zwischengliedes kann optimal auf die Axialbewegungen eingestellt werden, um ein geringes Reibmoment zu erzielen. Entsprechend lassen sich auch die Kennwerte der elastomeren Werkstoffe für den die radialen Belastungen aufnehmenden Elastomerkörper und für das Zwischenglied an beiden axialen Lagerenden unterschiedlich wählen und die Geometrien des Elastomerkörpers und des Zwischengliedes unterschiedlich gestalten.

Für das Zwischenglied an beiden Enden ist ein an sich bekannter trapezförmiger Querschnitt besonders geeignet, durch den mit zunehmender Axialverschiebung der Innenbuchse gegenüber der Außenbuchse größer werdende Rückstellkräfte in dem elastomeren Werkstoff des Zwischengliedes aufgebaut werden. Dies kann durch einen zur gedachten Kegelspitze hin sich verringernden Querschnitt und andere entsprechende Profilierungen des Zwischengliedes sowie auch unterstützend durch den Querschnitt variierende Härtegrade des Zwischengliedes erreicht werden.

Der Anspruch 2 enthält eine bevorzugte Ausgestaltung der Erfindung.

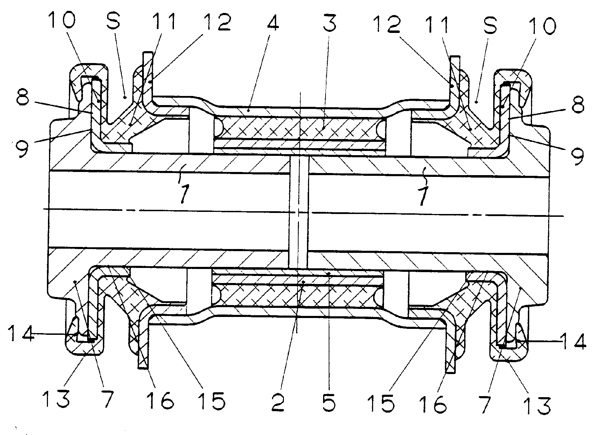

Ein Ausführungsbeispiel einer Lagerausbildung mit den Erfindungsmerkmalen ist in der Zeichnung in einem Schnitt in einer Achsebene des Lagers dargestellt.

Das Gleitlager besteht aus zwei starren, in spiegelbildlicher Lage zueinander angeordneten Innenbuchsen 1, einer im wesentlichen ebenfalls starren Außenbuchse 2, einem diese Außenbuchse 2 umgebenden Elastomerkörper 3 und einer Aufnahmebuchse 4, in die der mit der Außenbuchse 2 festhaftend verbundene Elastomerkörper 3 ebenfalls festhaftend eingesetzt ist. Die inneren Enden der beiden Innenbuchsen 1 ragen von entgegengesetzten Seiten her in die Außenbuchse hinein und sind durch einen auf der Zeichnung nicht dargestellten, die Innenbuchsen 1 durchgreifenden Bolzen mit einem Fahrzeugteil verbindbar sowie gegeneinander verspannbar. Zur Verbesserung der Gleiteigenschaften befindet sich zwischen den Innenbuchsen 1 und der Außenbuchse 2 eine Gleitschicht aus einem Werkstoff mit guten Gleiteigenschaften, zum Beispiel eine Gleitbuchse 5 aus PTFE. An dem nach dem Einbau axial äußeren Ende ist jede der beiden Innenbuchsen 1 mit einem sich radial erstreckenden Flanschvorsprung 7 versehen, der in einer Radialebene eine Axiallagerfläche 8 bildet, welche jeweils mit einer Radiallagerfläche 9 an einem radialen Flanschvorsprung 10 zusammenwirkt, von denen jeweils einer an beiden Enden der Außenbuchse angeordnet ist bzw. mit der Außenbuchse 2 in Verbindung steht. Zur Verbesserung der Laufeigenschaften kann zwischen den Axiallagerflächen 8 und 9 ebenfalls eine Schicht aus einem Werkstoff mit guten Gleiteigenschaften vorgesehen sein, zum Beispiel eine Scheibe mit einem solchen Werkstoff eingelegt sein. Die der Außenbuchse 2 zugeordneten Flanschvorsprünge 10 weisen eine Radiallagerfläche 15 auf, die mit einer Radiallagerfläche 16 der Innenbuchse 1 zusammenwirkt und ist über ein Zwischenglied 11 aus elastomerem Werkstoff mit der Aufnahmebuchse 4 und somit über den Elastomerkörper 3 auch mit der Außenbuchse 2 verbunden. Die Radiallagerflächen 15 und 16 können ebenfalls eine Gleitbuchse zwischen sich einschließen oder mit einem gute Gleiteigenschaften aufweisenden Werkstoff beschichtet sein. Das Zwischenglied 11 kann ein Element eines Gummi-Metallteils sein, dessen axiale Enden durch im Querschnitt winkelförmige Metallringe gebildet werden, von denen der nach dem Einbau axial außenliegende Metallring den radialen Flanschvorsprung 10 bildet, der der Außenbuchse 2 zugeordnet ist, und der nach dem Einbau axial innenliegende Metallring 12 eine Verbindung mit der Aufnahmebuchse 4 aufweist. Eventuell können die Außenbuchse 2, die Aufnahmebuchse 4 und der Elastomerkörper 3 gemeinsam mit je einem an beiden axialen Enden angeordneten Zwischenglied 11 und einem Metallring 9, an dem sich der Flanschvorsprung 10 befindet, als einstückiges Gummi-Metallteil ausgebildet sein. Das Zwischenglied 11 aus elastomerem Werkstoff ist in Schnitten durch die Achsebene trapezförmig ausgebildet, wobei sich der Querschnitt in Achsrichtung von innen nach außen verringert. Dadurch kann bei geeigneter Ausbildung erreicht werden, daß geringe Axialverschiebungen der Innenbuchse 1 gegenüber der Außenbuchse 2 in der einen oder in der anderen Richtung dem Drehmoment angepaßte Rückstellkräfte in dem Zwischenglied 11 aufbauen, so daß das Reibmoment des Lagers dadurch noch nicht spürbar vergrößert wird. Größer werdende Axialverschiebungen über den Freiweg S hinaus bedingen eine Vergrößerung des Freiweges auf der spiegelbildlichen Seite. Bei Reduzierung des Freiweges S auf nahezu Null ist die axiale Vorspannung bei dem der Belastung gegenüberliegenden Teil nahezu abgebaut. Eine weitere Freiwegreduzierung ist nicht möglich, somit auch kein weiterer Vorspannungsabbau, so daß zwischen den Bauteilen 10 und 7 und 8 und 9 kein Spiel auftreten kann. Zum Zwecke der Verbesserung der Lagerabdichtung ist der elastomere Werkstoff des Zwischengliedes 11 mit einem die Axiallagerflächen 8 und 9 außenseitig umgreifenden Tragrand 13 einstückig ausgebildet, dessen lippenartiger Rand 14 axial außen an dem Flanschvorsprung 7 an der Innenbuchse 1 und nach dem Einbau auch an einem das Lager aufnehmenden Fahrzeugteil dichtend anliegt.

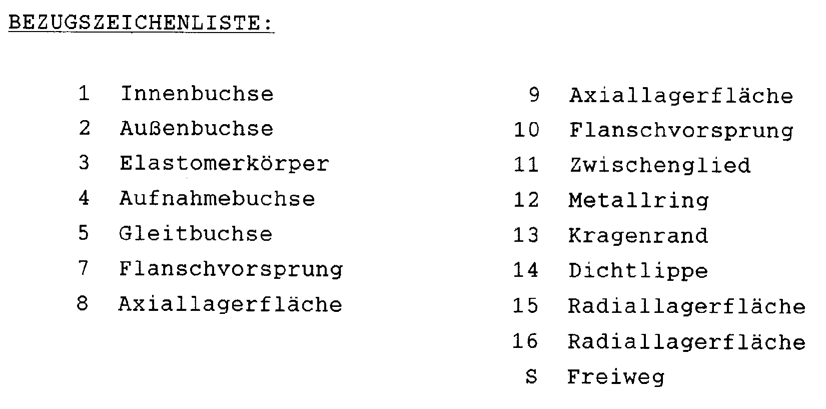

## Patentansprüche

1. Elastisches Gleitlager für Fahrwerksteile in Kraftfahrzeugen, bei dem eine starre Innenbuchse (1) gleitend beweglich in einer Außenbuchse (2), diese Außenbuchse (2) in einem darauf festhaftenden Elastomerkörper (3) und der Elastomerkörper (3) in einer Aufnahmebuchse (4) angeordnet ist, wobei an wenigstens einem axial äußeren Ende zusammenwirkende und aneinanderliegend montierte Axiallagerflächen (8,9) an zwei radial gerichteten Flanschvorsprüngen (7,10) vorgesehen sind, von denen der eine Flanschvorsprung (7) an der Innenbuchse (1) ausgebildet und der andere Flanschvorsprung (10) mittelbar durch ein Zwischenglied (11) aus elastischem Werkstoff, welches in einem durch eine Achsebene gelegten Schnitt trapezförmig ausgebildet ist, mit der Aufnahmebuchse (4) verbunden ist, dadurch gekennzeichnet, daß zwei in einer spiegelbildlich zueinander gemeinsamen Mittelebene angeordnete Innenbuchsen (1) eine gemeinsame Außenbuchse (2), einen gemeinsamen Elastomerkörper (3) und eine gemeinsame Aufnahmebuchse (4) aufweisen, deren axiale Enden je mit einem axial elastischen Zwischenglied (11) verbunden sind, welches mit je einem von zwei der Außenbuchse (2) zugeordneten Flanschvorsprüngen (10) verbunden ist, die je mit einem Flanschvorsprung (7) an einer der beiden Innenbuchsen (1) zusammenwirken.

2. Elastisches Gleitlager nach Anspruch 1, dadurch gekennzeichnet, daß die Außenbuchse (2), die Aufnahmebuchse (4) und der Elastomerkörper (3) gemeinsam mit je einem an beiden axialen Enden angeordneten Zwischenglied (11) und einem Metallring (9), an dem sich der Flanschvorsprung (10) befindet, als einstückiges Gummi-Metallteil ausgebildet sind.

## Claims

1. Elastic sliding bearing for chassis parts in motor vehicles, in which a rigid inner sleeve (1) is disposed so as to be capable of sliding movement in an outer sleeve (2), said outer sleeve (2) is disposed in an elastomer body (3) adhering firmly thereto and the elastomer body (3) is disposed in a receiving sleeve (4), with at at least one axially outer end cooperating thrust bearing surfaces (8, 9) mounted to as to lie adjacent to one another are provided at two radially directed flange projections (7, 10), of which the one flange projection (7) is constructed on the inner sleeve (1) and the other flange projection (10) is indirectly connected to the receiving sleeve (4) by an intermediate member (11) made of elastic material which in a section through an axial plane is trapezoidal, characterized in that two inner sleeves (1) disposed in a common centre plane in a mirror-image manner relative to one another have a common outer sleeve (2), a common elastomer body (3) and a common receiving sleeve (4), whose axial ends are each connected to an axially elastic intermediate member (11), which is connected to a respective one of two flange projections (10) which are associated with the outer sleeve (2) and cooperate in each case with a flange projection (7) on one of the two inner sleeves (1).

2. Elastic sliding bearing according to claim 1, characterized in that the outer sleeve (2), the receiving sleeve (4) and the elastomer body (3) are constructed, jointly with one intermediate member (11) and one metal ring (9) on which the flange projection (10) is situated disposed at each of the two axial ends, as an integral rubber-metal part.

## Revendications

1. Palier glissant élastique pour composants de châssis de véhicules automobiles, dans lequel une douille intérieure rigide (1) est disposée de façon mobile en glissement dans une douille extérieure (2), cette douille extérieure (2) étant disposée dans un corps élastomère (3) adhérant à celle-ci et le corps élastomère (3) étant disposé dans une douille réceptrice (4), des faces de palier de butée (8, 9), qui coopèrent l'une avec l'autre au niveau d'au moins une extrémité axialement extérieure et sont montées en appui l'une sur l'autre, étant prévues au niveau de deux collerettes proéminentes (7, 10) s'étendant dans le sens radial, l'une des collerettes proéminentes (7) étant formée sur la douille intérieure (1), et l'autre collerette proéminente (10) étant reliée à la douille réceptrice (4) de façon indirecte par l'intermédiaire d'un élément intercalaire (11) en une matière élastique, cet élément, vu en coupe selon un plan axial, présentant une forme trapézoïdale, caractérisé en ce que deux douilles intérieures (1) disposées avec un plan médian commun, de façon symétrique en miroir l'une à l'autre, ont une douille extérieure commune (2), un corps élastomère commun (3) et une douille réceptrice commune (4), dont les extrémités axiales sont respectivement reliées à un élément intercalaire axialement élastique (11) qui est relié à l'une des deux collerettes proéminentes (10) associées aux douilles extérieures (2) et coopérant avec une collerette proéminente respective (7) ménagée sur l'une des deux douilles intérieures (1).

2. Palier glissant élastique selon la revendication 1, caractérisé en ce que la douille extérieure (2), la douille réceptrice (4) et le corps élastomère (3) sont réalisés sous forme d'un élément métallo-caoutchouc monobloc, en conjonction avec un élément intermédiaire (11) respectivement disposé aux deux extrémités axiales de l'ensemble, et avec une bague métallique (9), sur laquelle est agencée la collerette saillante (10).
